# FASCICULE DE BREVET EUROPEEN

(11) **EP 2 780 417 B1**
(45) Date de publication et mention de la délivrance du brevet: **21.08.2019**
(21) Numéro de dépôt: 12795534.2
(22) Date de dépôt: 13.11.2012
(51) Int. Cl.: C08L 33/02, C08L 33/06, C08L 33/14, C09D 131/04

(54) **EPAISSISSANTS IONIQUES ASSOCIATIFS CONTENANT DES ALKYLS CYCLOHEXYLOLS ALKOXYLES, LEURS UTILISATIONS ET FORMULATIONS LES CONTENANT**
IONISCHE ASSOZIATIVE VERDICKUNGSMITTEL MIT ALKOXYLIERTEN CYCLOHEXYLOLALKYLEN, VERWENDUNGEN DAVON UND FORMULIERUNGEN DAMIT
IONIC ASSOCIATIVE THICKENERS CONTAINING ALKOXYLATED CYCLOHEXYLOL ALKYLS, USES THEREOF AND FORMULATIONS CONTAINING SAME

(30) Priorité: 18.11.2011 FR 1103522
(43) Date de publication de la demande: 24.09.2014
(73) Titulaire: COATEX, 69730 Genay (FR)
(72) Inventeur: SUAU, Jean-Marc, F-69480 Lucenay (FR); RUHLMANN, Denis, F-69730 Genay (FR)
(74) Mandataire: Balmefrezol, Ludovic Francis Pierre
(86) Numéro de dépôt international: PCT/FR2012/052613
(87) Numéro de publication internationale: WO 2013/072617

(56) Documents cités:
- FR-A1- 2 872 815
- FR-A1- 2 956 862

## Description

La présente invention concerne de nouveaux épaississants associatifs appartenant à la catégorie des HASE (Emulsions modifiées hydrophobiquement et épaississantes en milieu alcalin ou Hydrophobically modified Alkali-soluble Emulsions). Ces produits contiennent un monomère associatif original à base d'alkyl cyclohexylols alkoxylés. Leur pouvoir épaississant est supérieur aux épaississants associatifs HASE de l'art antérieur contenant des alkyls phénols greffés. On dispose donc d'un produit de substitution efficace et exempt d'alkyls phénols, ce qui correspond à la demande actuelle du marché.

Maîtriser la rhéologie d'une peinture, tant au stade de sa fabrication, que pendant son transport, son stockage ou sa mise en oeuvre reste aujourd'hui une priorité. La diversité des contraintes observées au niveau de chacune de ces étapes renvoie à une multiplicité de comportements rhéologiques différents. On peut néanmoins résumer le besoin de l'homme du métier à l'obtention d'un effet d'épaississement de ladite peinture, tant pour des raisons de stabilité au cours du temps, que pour une possible application sur une surface verticale, l'absence d'éclaboussure au moment de la mise en oeuvre, ou de coulure par la suite, etc... De fait, on a désigné les produits qui contribuent à cette régulation du comportement rhéologique sous le terme d'épaississants.

Historiquement, on a utilisé dès les années 1950 des gommes et des produits à base cellulosique, dont une des caractéristiques essentielles est leur poids moléculaire élevé. Ces composés présentent cependant un certain nombre d'inconvénients tels que leur instabilité au cours du temps (voir le document US 4 673 518), la nécessité d'en utiliser une quantité importante (voir le document EP 0 250 943 A1), ou leur coût de production, notamment au niveau du traitement des déchets (voir le document US 4 384 096).

Ont ensuite vu le jour les épaississants dits « associatifs » : ce sont des polymères hydrosolubles disposant de groupements hydrophobes insolubles. De telles macromolécules ont un caractère associant : une fois introduits dans l'eau, les groupements hydrophobes sont susceptibles de s'assembler sous forme d'agrégats micellaires. Ces agrégats sont reliés entre eux par les parties hydrophiles des polymères : il y a alors formation d'un réseau tridimensionnel qui provoque l'augmentation de la viscosité du milieu. Leur mécanisme de fonctionnement et leurs caractéristiques sont désormais bien connus et décrits par exemple dans les documents « Rheology modifiers for water-borne paints » (Surface Coatings Australia, 1985, pp. 6-10) et « Rheological modifiers for water-based paints : the most flexible tools for your formulations » (Eurocoat 97, UATCM, vol. 1, pp 423-442).

Parmi ces épaississants associatifs, on distingue la catégorie des HEUR (Uréthane oxyde d'Ethylène modifiés Hydrophobiquement ou Hydrophobically modified Ethylene oxyde URethane selon l'acronyme anglo-saxon approprié) et des HASE (Emulsions modifiées hydrophobiquement et épaississantes en milieu alcalin ou Hydrophobically modified Alkali-soluble Emulsions). Les premiers désignent des polymères résultant de la synthèse entre un composé du type polyalkylène glycol, un polyisocyanate, et un monomère associatif alkyle et/ou aryle constitué d'un groupe terminal hydrophobe. Les seconds désignent des polymères de l'acide (méth)acrylique, d'un ester de ces acides et d'un monomère associatif présentant une fonction polymérisable et disposant d'une chaîne oxyalkylée terminée par un groupement hydrophobe.

Les HEUR peuvent conférer de nombreuses propriétés et avantages aux peintures aqueuses, notamment fonction de la nature de leur monomère associatif. On pourra citer les demandes de brevet suivantes déposées par la société COATEX : EP 0 639 595 A1 qui propose des groupements hydrophobes ayant de 4 à 36 atomes de carbone pour augmenter la viscosité Brookfield™, WO 02 / 102868 A1 qui décrit l'utilisation de plurystyrylphénols avec plus de 40 atomes pour augmenter la viscosité quel que soit le gradient de cisaillement, et enfin EP 1 425 325 A1 qui révèle un monomère associatif constitué de di- et tristyrylphénol, permettant d'obtenir une excellente compatibilité pigmentaire et une viscosité élevée à bas et moyen gradient de cisaillement.

Cependant, les HEUR restent des espèces chimiques difficilement solubles dans l'eau et nécessitent pour leur mise en solution des solvants ou des tensio-actifs, dès lors que leur % en matière active excède environ 15 %. Cette problématique est relatée dans le document EP 0 682 094 A1 : la solution proposée repose de manière triviale sur l'emploi de tensio-actifs. De plus, on notera que des épaississants de type HEUR, hautement concentrés et contenant des tensio-actifs, avaient été commercialisés par la société COATEX™ sous les noms COAPUR™ 5035 et COAPUR™ 6050, avant la date de priorité de cette demande, et dès 1993 pour les premiers d'entre eux.

Or, la mise en oeuvre de solvants et de tensio-actifs pour formuler l'épaississant de type HEUR n'est pas sans poser un certain nombre de problèmes. On rappelle d'une part que les solvants sont soumis à des législations de plus en plus draconiennes visant à restreindre et même proscrire leur utilisation dans les peintures. Quant aux tensio-actifs de la formulation épaississante, ils sont de nature à impacter parfois de manière problématique les peintures, par interaction avec les autres tensio-actifs contenus dans ces dernières peintures. Par conséquent, la formulation de HEUR uniquement dans l'eau n'est possible qu'à condition de restreindre la concentration en polyuréthane (de l'ordre de 20 % en poids), ce qui rend ces épaississants peu efficaces en l'état, ou de réduire leur efficacité épaississante intrinsèque ce qui n'est pas souhaitable.

Aussi, l'homme du métier s'oriente-t-il vers les épaississants de type HASE. Pour ces derniers, le choix du groupement hydrophobe du monomère associatif est à l'origine de propriétés rhéologiques variées. On peut citer à cet égard les demandes de brevet suivantes déposées par COATEX™ : EP 0 577 526 A1 qui décrit une chaîne grasse avec des groupes linéaires ou ramifiés du type alkyle et/ou aryle ayant de 26 à 30 atomes de carbone, pour développer de hautes viscosités sous bas gradient de cisaillement, et EP 1 778 797 A1 qui décrit une chaîne terminale ramifiée comportant de 10 à 24 atomes de carbone, pour améliorer la compatibilité pigmentaire et augmenter la viscosité de manière générale.

Parmi les épaississants HASE les plus efficaces, en terme de pouvoir épaississant, se trouvent les émulsions contenant des alkyl phénols greffés et jouant le rôle de chaîne terminale hydrophobe. On peut citer à titre d'exemples les produits Rheotech™ 2100 et Rheotech™ 3000 commercialisés par la société COATEX™. Or, les alkylphénols sont aujourd'hui largement suspectés d'être cancérigènes et dangereux pour la reproduction ; encore tolérés dans l'industrie des peintures, ils n'en demeurent pas moins dans le collimateur des institutions législatives en la matière, notamment européennes. Ces produits ne constituent donc pas une réponse satisfaisante pour l'homme du métier, même quand ils sont greffés sur un polymère de poids moléculaire important.

Par conséquent, disposer d'une émulsion de type HASE présentant un pouvoir épaississant comparable à celui des émulsions de l'art antérieur contenant des alkyl phénols, mais sans mettre en oeuvre ces derniers, représente un problème technique non résolu à ce jour.

La Demanderesse, travaillant à ce problème est parvenue à mettre au point de nouveaux épaississants acryliques associatifs, mettant en oeuvre un monomère associatif très particulier, dont la chaîne oxyalkylée porteuse d'un groupe hydrophobe est un alkyl cyclohexyl alkoxylé. De tels composés ont été identifiés en tant qu'agents tensio-actifs et sont obtenus par alkoxylation d'un alkyl phénol et hydrogénation du produit obtenu. On pourra notamment se reporter au document US 6 111 146 qui décrit leur synthèse. Les composés résultants sont désignés sous l'expression d'« alkyls cyclohexylols alkoxylés » ou « cyclohexanols alkoxylés ». Il est important d'ajouter que la structure finale n'est pas celle d'un alkyl phénol, et que le produit résultant ne sera pas catégorisé comme tel.

Au final, ledit monomère associatif possède donc la formule suivante (I) : 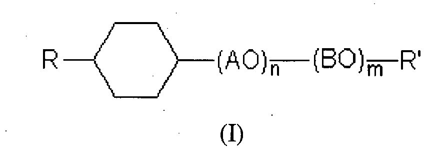 où :
- m et n sont des entiers inférieurs à 150 dont au moins un est non nul,
- A et B désignent des groupes alkyles différents l'un de l'autre, et ayant de 2 à 4 atomes de carbone, le groupement AO désignant préférentiellement l'oxyde d'éthylène et le groupement BO désignant préférentiellement l'oxyde de propylène,
- R' désigne une fonction irisaturée polymérisable, préférentiellement méthacrylate,
- R désigne un groupement alkyle, linéaire ou ramifié contenant de 8 à 20 atomes de carbone, préférentiellement un groupement alkyle linéaire ayant de 9 à 12 atomes de carbone.

Les épaississants associatifs qui résultent de la polymérisation de ce monomère de formule (I), d'acide (méth)acrylique et d'un ester de l'acide (méth)acrylique sont donc dénués d'alkyl phénols ; de manière inattendue et particulièrement avantageuse, ils permettent d'épaissir une peinture aqueuse à un niveau de viscosité au moins égal à celui offert par des HASE de l'art antérieur contenant des alkyl phénols. On démontre même qu'on obtient pour l'invention un profil rhéologique très similaire à celui proposé par les produits de l'état de la technique aux alkyl phénols. On est donc parvenu à mettre au point un produit au moins équivalent, en s'affranchissant de la problématique liée à l'emploi d'alkyl phénols.

Aussi, un premier objet de l'invention consiste en une émulsion de type HASE, contenant de l'eau et au moins un polymère constitué :
a) d'acide (méth)acrylique,
b) d'au moins un ester de l'acide (méth)acrylique,
c) d'au moins un monomère de formule (I) : 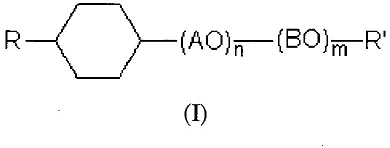 où :
   - m et n sont des entiers inférieurs à 150 dont au moins un est non nul,
   - A et B désignent des groupes alkyles différents l'un de l'autre, et ayant de 2 à 4 atomes de carbone, le groupement AO désignant préférentiellement l'oxyde d'éthylène et le groupement BO désignant préférentiellement l'oxyde de propylène, les groupements AO et BO étant disposés de manière aléatoire ou de manière régulière,
   - R' désigne une fonction insaturée polymérisable, préférentiellement méthacrylate,
   - R désigne un groupement alkyle, linéaire ou ramifié contenant de 8 à 20 atomes de carbone, préférentiellement un groupement alkyle linéaire ayant de 9 à 12 atomes de carbone.

Selon un mode de réalisation de la présente invention, ces émulsions sont caractérisées en ce que, pour le monomère de formule (I), on a n = 0, AO désigne l'oxyde d'éthylène, et m est compris entre 20 et 40.

Selon un autre mode de réalisation de la présente invention, ces émulsions sont caractérisées en ce que ledit polymère qu'elles contiennent est constitué, exprimé en % en poids de chacun de ses monomères :
a) de 20 % à 55 %, préférentiellement de 35 % à 45 % d'acide (méth)acrylique,
b) de 40 % à 70 %, préférentiellement de 45 % à 55 % d'au moins un ester de l'acide (méth)acrylique,
c) de 2 % à 20 %, préférentiellement de 3 % à 15 % d'au moins un monomère ayant la formule (I) précitée.

Un deuxième objet de la présente invention consiste en un procédé d'épaississement d'une formulation aqueuse, par introduction dans ladite formulation d'une émulsion de type HASE précitée.

Un troisième objet de la présente invention consiste en une formulation aqueuse contenant une émulsion de type HASE selon l'invention, cette formulation étant selon un mode de réalisation de la présente invention, une peinture aqueuse.

Un autre objet encore de la présente invention consiste en l'utilisation d'au moins un monomère de formule (I) : 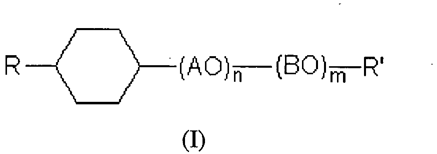 où :
- m et n sont des entiers inférieurs à 150 dont au moins un est non nul,
- A et B désignent des groupes alkyles différents l'un de l'autre, et ayant de 2 à 4 atomes de carbone
- R' désigne une fonction insaturée polymérisable,
- R désigne un groupement alkyle, linéaire ou ramifié contenant de 8 à 20 atomes de carbone,
pour préparer un polymère destiné à être utilisé dans une émulsion de type HASE.

Un dernier objet de la présente invention consiste en l'utilisation d'un polymère constitué
a) d'acide (méth)acrylique,
b) d'au moins un ester de l'acide (méth)acrylique,
c) d'au moins un monomère de formule (I) : 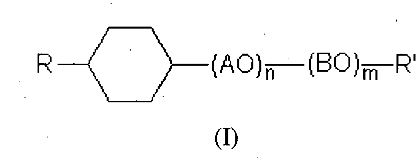 où :
   - m et n sont des entiers inférieurs à 150 dont au moins un est non nul,
   - A et B désignent des groupes alkyles différents l'un de l'autre, et ayant de 2 à 4 atomes de carbone
   - R' désigne une fonction insaturée polymérisable,
   - R désigne un groupement alkyle, linéaire ou ramifié contenant de 8 à 20 atomes de carbone,
pour préparer une émulsion de type HASE.

### EXEMPLES

### Exemple 1

Cet exemple illustre la fabrication d'une peinture aqueuse, dans laquelle on met en oeuvre un épaississant de l'art antérieur contenant un alkyl phénol ayant 15 atomes de carbone, et un épaississant selon l'invention, dont le groupement R est une chaîne alkyle linéaire ayant 9 atomes de carbone : le groupe hydrophobe correspondant contient donc ici 15 atomes de carbone.

### Essai n° 1

Cet essai illustre l'art antérieur. Il correspond à la mise en oeuvre d'une émulsion aqueuse à 30 % en poids sec d'un polymère contenant des alkyls phénols greffés, qui est le Rheotech™ 3000 commercialisé par la société Coatex™.

### Essai n° 2

Cet essai illustre l'art antérieur. Il correspond à la mise en oeuvre d'une émulsion aqueuse contenant 30 % en poids sec d'un polymère constitué de, exprimé en % en poids de chacun de ses monomères :
a) 37,1 % d'acide (méth)acrylique,
b) 52,9 % d'acrylate d'éthyle,
c) 10,0 % en poids d'un monomère de formule R'-(OE)ₙ-R'"
où R' désigne la fonction méthacrylate, OE est l'oxyde d'éthylène, n est égal à 25 et R'" est le groupement alkyl phénol ayant 15 atomes de carbone.

### Essai n° 3

Cet essai illustre l'invention. Il correspond à la mise en oeuvre d'une émulsion aqueuse contenant 30 % en poids sec d'un polymère constitué de, exprimé en % en poids de chacun de ses monomères :
a) 37,0 % d'acide (méth)acrylique,
b) 53,0 % d'acrylate d'éthyle,
c) 10,0 % en poids d'un monomère de formule 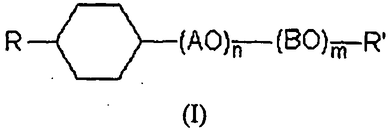
où m = 0 et n = 25, R' est la fonction méthacrylate et R désigne le groupe alkyle linéaire ayant 9 atomes de carbone.

Dans chacun des essais n° 1 à 3, on introduit dans un bécher 150 grammes de Mowilith™ LDM 1871, 42 grammes d'eau bipermutée et 6 grammes de l'émulsion à tester.

On ajuste le pH au moyen d'ammoniaque (28 %) à une valeur comprise entre 8,6 et 8,9. A 25°C, on mesure alors les viscosités Brookfield™ à 10 et 100 tours par minute (µ_{Bk10} et µ_{Bk100}), Stormér™ (µ_{S}) et ICI™ (µ_{ICI})de la peinture.

Les résultats apparaissent dans le tableau 1.

**Tableau 1**

| Essai n° | 1 | 2 | 3 |
|---|---|---|---|
| Art Antérieur INvention | AA | AA | IN |
| µ_{Bk10} | 17 500 | 16 900 | 18 300 |
| µ_{Bk100} | 4 800 | 4 500 | 5 000 |
| µ_{S} | 119 | 116 | 121 |
| µ_{ICI} | 1,6 | 1,5 | 1,6 |

## Revendications

1. Emulsion de type HASE, contenant de l'eau et au moins un polymère constitué :
a) d'acide (méth)acrylique,
b) d'au moins un ester de l'acide (méth)acrylique,
c) d'au moins un monomère de formule (I) : 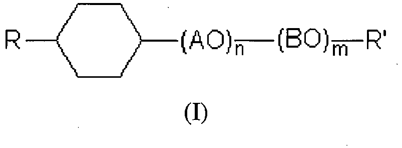 où :
- m et n sont des entiers inférieurs à 150 dont au moins un est non nul,
- A et B désignent des groupes alkyles différents l'un de l'autre, et ayant de 2 à 4 atomes de carbone
- R' désigne une fonction insaturée polymérisable,
- R désigne un groupement alkyle, linéaire ou ramifié contenant de 8 à 20 atomes de carbone,

2. Emulsion de type HASE selon la revendication 1, selon laquelle le groupement AO désigne l'oxyde d'éthylène et le groupement BO désigne l'oxyde de propylène.

3. Emulsion de type HASE selon la revendication 1 ou 2, selon laquelle le monomère R' désigne le méthacrylate.

4. Emulsion de type HASE selon l'une quelconque des revendications précédentes, selon laquelle le monomère R désigne un groupement alkyle linéaire ayant de 9 à 12 atomes de carbone.

5. Emulsions selon l'une quelconque des revendications précédentes, **caractérisées en ce que**, pour le monomère de formule (I), on a n = 0, AO désigne l'oxyde d'éthylène, et m est compris entre 20 et 40.

6. Emulsions selon, l'une quelconque des revendications précédentes **caractérisées en ce que** ledit polymère est constitué, exprimé en % en poids de chacun de ses monomères :
a) de 20 % à 55 % d'acide (méth)acrylique,
b) de 40 % à 70 % d'au moins un ester de l'acide (méth)acrylique,
c) de 2 % à 20 % d'au moins un monomère de formule (I).

7. Emulsions selon la revendication 6 **caractérisées en ce que** ledit polymère est constitué, exprimé en % en poids de chacun de ses monomères :
a) de 35 % à 45 % d'acide (méth)acrylique,
b) de 45 % à 55 % d'au moins un ester de l'acide (méth)acrylique,
c) de 3 % à 15 % d'au moins un monomère de formule (I).

8. Procédé d'épaississement d'une formulation aqueuse, par introduction dans ladite formulation d'une émulsion de type HASE selon une des revendications 1 à 7.

9. Formulation aqueuse contenant une émulsion de type HASE selon une des revendications 1 à 7.

10. Formulation aqueuse selon la revendication 9, **caractérisée en ce qu'**elle est une peinture aqueuse.

11. Utilisation d'au moins un monomère de formule (I) : 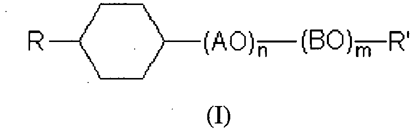 où :
- m et n sont des entiers inférieurs à 150 dont au moins un est non nul,
- A et B désignent des groupes alkyles différents l'un de l'autre, et ayant de 2 à 4 atomes de carbone
- R' désigne une fonction insaturée polymérisable,
- R désigne un groupement alkyle, linéaire ou ramifié contenant de 8 à 20 atomes de carbone,
pour préparer un polymère destiné à être utilisé dans une émulsion de type HASE.

12. Utilisation d'un polymère constitué :
a) d'acide (méth)acrylique,
b) d'au moins un ester de l'acide (méth)acrylique,
c) d'au moins un monomère de formule (I) : 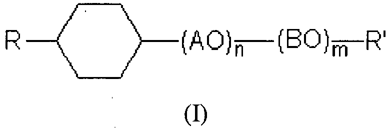 où :
- m et n sont des entiers inférieurs à 150 dont au moins un est non nul,
- A et B désignent des groupes alkyles différents l'un de l'autre, et ayant de 2 à 4 atomes de carbone
- R' désigne une fonction insaturée polymérisable,
- R désigne un groupement alkyle, linéaire ou ramifié contenant de 8 à 20 atomes de carbone,
pour préparer une émulsion de type HASE.

## Patentansprüche

1. Emulsion vom Typ HASE, die Wasser und mindestens ein Polymer enthält, zusammengesetzt aus:
a) (Meth)acrylsäure,
b) mindestens einem (Meth)acrylsäureester,
c) mindestens einem Monomer mit der Formel (I): 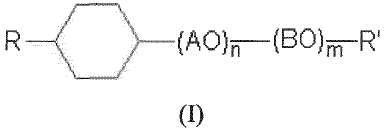 wobei:
- m und n Ganzzahlen unter 150 sind, von denen mindestens eine Zahl ungleich Null ist,
- A und B voneinander abweichende Alkylgruppen mit 2 bis 4 Kohlenstoffatomen bezeichnen,
- R' eine polymerisierbare ungesättigte funktionelle Gruppe bezeichnet,
- R eine lineare oder verzweigte Alkylgruppe mit 8 bis 20 Kohlenstoffatomen bezeichnet.

2. Emulsion vom Typ HASE nach Anspruch 1, bei der die Gruppe AO Ethylenoxid und die Gruppe BO Propylenoxid bezeichnet.

3. Emulsion vom Typ HASE nach Anspruch 1 oder 2, bei der das Monomer R' das Methacrylat bezeichnet.

4. Emulsion vom Typ HASE nach einem der vorstehenden Ansprüche, bei der das Monomer R eine lineare Alkylgruppe mit 9 bis 12 Kohlenstoffatomen bezeichnet.

5. Emulsionen nach einem der vorstehenden Ansprüche, **dadurch gekennzeichnet, dass** bei dem Monomer mit der Formel (I) n = 0 ist, AO Ethylenoxid bezeichnet und m zwischen 20 und 40 liegt.

6. Emulsionen nach einem der vorstehenden Ansprüche, **dadurch gekennzeichnet, dass** das Polymer, in Gew.-% jedes seiner Monomere ausgedrückt, zusammengesetzt ist aus:
a) 20 % bis 55 % (Meth)acrylsäure,
b) 40 % bis 70 % von mindestens einem (Meth)acrylsäureester,
c) 2 % bis 20 % von mindestens einem Monomer mit der Formel (I).

7. Emulsionen nach Anspruch 6, **dadurch gekennzeichnet, dass** das Polymer, in Gew.-% jedes seiner Monomere ausgedrückt, zusammengesetzt ist aus:
a) 35 % bis 45 % (Meth)acrylsäure,
b) 45 % bis 55 % von mindestens einem (Meth)acrylsäureester,
c) 3 % bis 15 % von mindestens einem Monomer mit der Formel (I).

8. Verfahren zur Verdickung einer wässrigen Formulierung durch Beimengung einer Emulsion vom Typ HASE nach einem der Ansprüche 1 bis 7 zu der Formulierung.

9. Wässrige Formulierung mit einer Emulsion vom Typ HASE nach einem der Ansprüche 1 bis 7.

10. Wässrige Formulierung nach Anspruch 9, **dadurch gekennzeichnet, dass** sie eine wässrige Anstrichfarbe ist.

11. Verwendung mindestens eines Monomers mit der Formel (I): 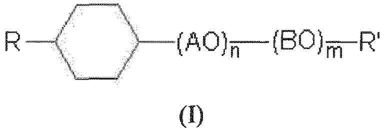 wobei:
- m und n Ganzzahlen unter 150 sind, von denen mindestens eine Zahl ungleich Null ist,
- A und B voneinander abweichende Alkylgruppen mit 2 bis 4 Kohlenstoffatomen bezeichnen,
- R' eine polymerisierbare ungesättigte funktionelle Gruppe bezeichnet,
- R eine lineare oder verzweigte Alkylgruppe mit 8 bis 20 Kohlenstoffatomen bezeichnet,
um ein Polymer herzustellen, das in einer Emulsion vom Typ HASE verwendet werden soll.

12. Verwendung eines Polymers zusammengesetzt aus:
a) (Meth)acrylsäure,
b) mindestens einem (Meth)acrylsäureester,
c) mindestens einem Monomer mit der Formel (I): 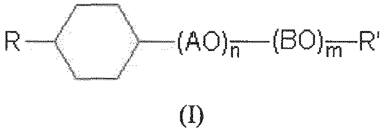 wobei:
- m und n Ganzzahlen unter 150 sind, von denen mindestens eine Zahl ungleich Null ist,
- A und B voneinander abweichende Alkylgruppen mit 2 bis 4 Kohlenstoffatomen bezeichnen,
- R' eine polymerisierbare ungesättigte funktionelle Gruppe bezeichnet,
- R eine lineare oder verzweigte Alkylgruppe mit 8 bis 20 Kohlenstoffatomen bezeichnet,
um eine Emulsion vom Typ HASE herzustellen.

## Claims

1. A HASE-type emulsion, containing water and at least one polymer consisting:
a) of (meth)acrylic acid,
b) of at least one ester of (meth)acrylic acid,
c) of at least one monomer of formula (I): 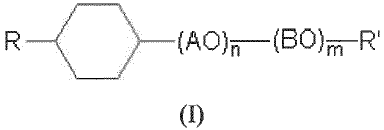 where:
- m and n are integers of less than 150, at least one of which is non-zero,
- A and B designate alkyl groups which are different one from another, and having from 2 to 4 carbon atoms,
- R' designates a polymerizable unsaturated group,
- R designates an alkyl group, linear or branched, containing from 8 to 20 carbon atoms.

2. The HASE-type emulsion according to claim 1, wherein group AO designates ethylene oxide and group BO designates propylene oxide.

3. The HASE-type emulsion according to claim 1 or 2, wherein the monomer R' designates methacrylate.

4. The HASE-type emulsion according to any of the preceding claims, wherein the monomer R designates a linear alkyl group with from 9 to 12 carbon atoms.

5. Emulsions according to any of the preceding claims, **characterized in that**, for the monomer of formula (I), n = 0, AO designates the ethylene oxide, and m is between 20 and 40.

6. The Emulsions according to any of the preceding claims, **characterized in that** said polymer consists, expressed as a % by weight of each of its monomers, of:
a) from 20% to 55% of (meth)acrylic acid,
b) from 40% to 70% of at least one ester of (meth)acrylic acid,
c) from 2% to 20% of at least one monomer of formula (I).

7. The emulsions according to claim 6, **characterized in that** said polymer consists, expressed as a % by weight of each of its monomers, of:
a) from 35% to 45% of (meth)acrylic acid,
b) from 45% to 55% of at least one ester of (meth)acrylic acid,
c) from 3% to 15% of at least one monomer of formula (I).

8. A method of thickening an aqueous formulation, by introducing a HASE-type emulsion according to one of claims 1 to 7 into said formulation.

9. An aqueous formulation containing a HASE-type emulsion according to one of claims 1 to 7.

10. The aqueous formulation according to claim 9, **characterized in that** it is a water-based paint.

11. A use of at least one monomer of formula (I): 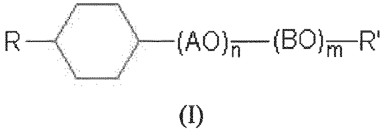 where:
- m and n are integers of less than 150, at least one of which is non-zero,
- A and B designate alkyl groups which are different one from another, and having from 2 to 4 carbon atoms,
- R' designates a polymerizable unsaturated group,
- R designates an alkyl group, linear or branched, containing from 8 to 20 carbon atoms,
to prepare a polymer to be used in a HASE-type emulsion.

12. A use of a polymer consisting:
a) of (meth)acrylic acid,
b) of at least one ester of (meth)acrylic acid,
c) of at least one monomer of formula (I): 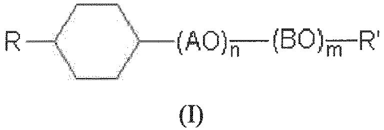 where:
- m and n are integers of less than 150, at least one of which is non-zero,
- A and B designate alkyl groups which are different one from another, and having from 2 to 4 carbon atoms,
- R' designates a polymerizable unsaturated group,
- R designates an alkyl group, linear or branched, containing from 8 to 20 carbon atoms,
to prepare a HASE-type emulsion.
